Europäisches Patentamt

European Patent Office

Office européen des brevets

(11) Numéro de publication: **0 037 790**
**A1**

## (12) DEMANDE DE BREVET EUROPEEN

(21) Numéro de dépôt: **81420045.7**

(22) Date de dépôt: **27.03.81**

(51) Int. Cl.³: **F 24 F 7/08**
**F 28 D 7/02**

(30) Priorité: **04.04.80 FR 8008017**

(43) Date de publication de la demande:
**14.10.81 Bulletin 81/41**

(84) Etats contractants désignés:
**AT BE CH DE GB IT LI LU NL SE**

(71) Demandeur: **Joguet, Jean**
**Rue d'Arly**
**F-74120 Megeve(FR)**

(72) Inventeur: **Joguet, Jean**
**Rue d'Arly**
**F-74120 Megeve(FR)**

(74) Mandataire: **Schmitt, John**
**9 Rue Pizay**
**F-69001 - Lyon(FR)**

(54) Dispositif de climatisation d'habitation.

(57) L'invention concerne un dispositif de climatisation d'habitation de type individuel ou collectif du genre récupérant l'air vicié pour réchauffer ou refroidir l'air neuf provenant de l'extérieur.

Ce dispositif est caractérisé par le fait qu'il comporte un échangeur (1) contenu dans une gaine isolée (4) (5) à cloisons hélicoïdales (6) permettant la circulation à contre-courant de l'air vicié (2) issu de l'intérieur et de l'air neuf (3) venant de l'extérieur, que cet échangeur est implanté dans les combles et/ou dans une gaine technique et/ou dans chaque appartement et qu'il est relié à un circuit de canalisations disposant de moyens d'alimentation et d'évacuation contrôlés.

Fig.1

- 1 -

## Dispositif de climatisation d'habitation.

L'invention concerne un dispositif de climatisation destiné à chauffer ou refroidir une habitation et susceptible de fournir une économie d'énergie.

On connaît des installations à ventilation mécanique contrôlée double flux dans lesquelles est incorporé un équipement dit "pompe à chaleur" récupérant les calories de l'air vicié avant de le rejeter à l'extérieur. Ces installations contribuent à de sensibles économies d'énergie sur la consommation du chauffage électrique, mais elles nécessitent toutes des systèmes de chauffage d'appoint complexes et onéreux du type puits canadien, capteur solaire, par exemple.

Pour pallier ces inconvénients, on a imaginé un dispositif de climatisation simple, pratique et économique susceptible d'être incorporé à des habitations individuelles ou collectives et utilisant en totalité les calories de l'air vicié de l'habitation pour les transmettre à l'air neuf et froid venant de l'extérieur ou, dans le cas d'installations dans des pays chauds, de refroidir l'air chaud venant de l'extérieur par l'air vicié plus frais de l'habitation.

L'invention est caractérisée par le fait que le dispositif utilise un échangeur à deux conduits hélicoïdaux permettant la circulation à contre-courant de l'air intérieur chaud vicié et de l'air frais extérieur.

L'échangeur est de forme cylindrique et est enfermé dans une gaine assurant son isolation thermique. Les deux veines d'air qui se côtoient au long des conduits parallèles échangent leurs calories-frigories à travers les parois minces et bonnes conductrices thermiques desdits conduits.

Les habitations dans lesquelles on peut prévoir l'installation du dispositif selon l'invention sont du type à grande isolation thermique. Dans une habitation on peut avoir un échangeur commun à plusieurs appartements et le loger soit dans les combles, soit dans une gaine technique affectant toute la hauteur du bâtiment ou bien avoir un échangeur par appartement, chaque échangeur étant équipé d'un aspirateur-extracteur.

Dans ce qui suit, l'invention est exposée plus en détail à l'aide de dessins schématisant un mode de réalisation de l'invention.

- La figure 1 est une vue en coupe et en élévation de l'échangeur selon l'invention montrant la circulation à contre-courant des deux veines d'air.

- La figure 2 est une vue en coupe transversale de l'échangeur de la figure 1.

- La figure 3 est une vue en coupe et en élévation d'une habitation équipée du dispositif de climatisation selon l'invention.

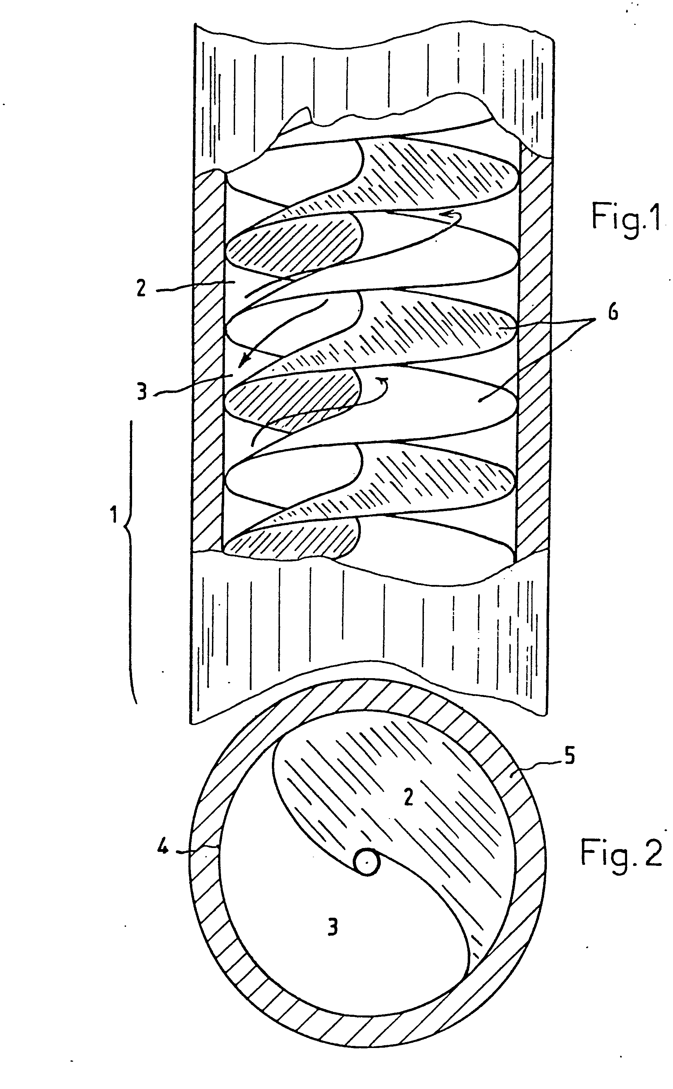

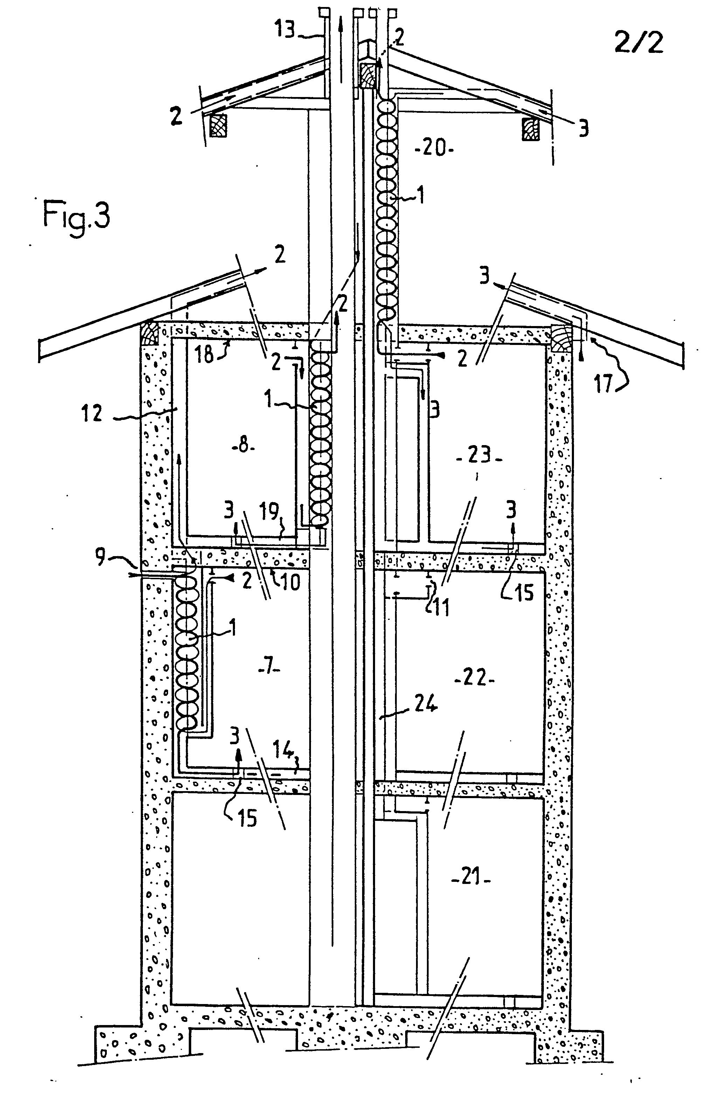

Sur les figures 1 et 2 on voit que l'échangeur 1 est constitué par deux cloisons 6 engendrant deux couloirs hélicoïdaux 2-3 coaxiaux parallèles disposés à l'intérieur d'un tube 4 dont le diamètre varie en fonction du volume d'air à climatiser. Dans l'exemple de réalisation décrit ce diamètre est de l'ordre de vingt centimètres. Ce tube 4 est lui-même enfermé dans une gaine cylindrique 5 constituant une isolation thermique de l'ensemble de l'échangeur. Les cloisons 6 formant lesdits couloirs sont réalisés dans un matériau bon conducteur laissant par conséquent passer chaleur et froid, par exemple de la tôle mince. La hauteur entre deux spires est relativement faible de manière à en augmenter le nombre ce qui a pour effet d'obtenir un échange plus complet des températures. Sur la figure 1 on a représenté par des flèches ascendantes le flux d'air chaud vicié dans le conduit 2 et par des flèches descendantes le flux d'air frais neuf dans le conduit 3. Cette circulation en sens inverse achemine les veines d'air dans des canalisations appropriées.

Sur la figure 3 on voit que l'échangeur peut se situer à différents endroits de l'habitation. Sur la gauche de la maison on a équipé deux appartements 7 et 8 d'un échangeur. Celui de l'appartement 7 est relié directement à l'extérieur par une ouverture 9 pratiquée dans le mur et assurant l'arrivée d'air neuf, l'air vicié recueilli au niveau du plafond 10 est contraint par un extracteur 11 à revenir à la base de l'échangeur 1 pour remonter dans le couloir 2 et de ce fait côtoyer l'air neuf froid venant de l'extérieur par l'ouverture 9 et le couloir 3. L'air vicié s'étant refroidi dans l'échangeur est évacué par les canalisations 12 qui le conduisent à la cheminée 13 tandis que l'air réchauffé est distribué dans l'appartement par des bouches 15 situées le long de la canalisation 14.

Pour l'appartement 8, l'air neuf vient de l'extérieur par la canalisation 16 dont l'entrée 17 est sous le toit, il passe dans l'échangeur 1 de l'appartement situé près du centre de la maison. Tout au long de son cheminement par le couloir 3 il se réchauffe au courant d'air vicié et chaud qui remonte le couloir 2 après avoir été prélevé au niveau du plafond 18 par un extracteur 11 qui l'a contraint à ce circuit. L'évacuation de l'air vicié se fait également par la cheminée 13, tandis que l'air neuf réchauffé aboutit dans les bouches identiques 15 au long de la canalisation de distribution 19.

Au centre de l'habitation montré figure 3 on a installé un échangeur au niveau des combles 20 pour illustrer une installation collective desservant trois appartements 21-22-23. L'air neuf et froid arrive par la canalisation 16 dont l'entrée 17 est sous le toit comme on l'a déjà vu. Il pénètre dans le couloir 3 de l'échangeur où il côtoie la veine d'air vicié et chaud du couloir 2 où elle a été amenée par extraction dans chaque appartement au moyen d'un aspirateur 11 disposé au plafond.

L'air neuf réchauffé est distribué par les canalisations 24-25-26 et les bouches 15 qui les jalonnent respectivement.

L'air vicié est évacué par la canalisation 24 qui collecte les trois appartements jusqu'à la cheminée 13.

L'air vicié est prélevé de préférence à proximité du plafond des cuisines, WC, salles de bains mais non exclusivement.

Chaque circuit de canalisations comporte un thermostat d'ambiance disposé dans chaque appartement et chargé de déclencher la mise en route des aspirateurs-extracteurs et éventuellement d'un convecteur d'appoint.

Dans le cas d'installations dans des pays tropicaux l'air extérieur se refroidit au moyen de l'air vicié par le même processus d'échange.

Revendications de brevet

1 - Dispositif de climatisation d'habitation de type individuel ou collectif du genre récupérant l'air vicié pour réchauffer ou refroidir l'air neuf provenant de l'extérieur, comprenant un échangeur (1) permettant la circulation à contre-courant de l'air vicié issu de l'intérieur et de l'air neuf issu de l'extérieur, implanté dans les combles et/ou dans une gaine technique et/ou dans chaque appartement, relié à un circuit de canalisations disposant de moyens d'alimentation et d'évacuation contrôlés, caractérisé par le fait que l'échangeur (1) comporte deux couloirs hélicoïdaux (2) - (3), coaxiaux, parallèles, dans lesquels circulent en sens inverse deux veines d'air de volumes identiques, qui échangent leurs calories ou leurs frigories à travers une paroi de séparation (6).

2 - Dispositif suivant la revendication 1, caractérisé par le fait que l'échangeur (1) est constitué par une gaine cylindrique (4) isolée thermiquement (5) dans laquelle sont disposées les deux parois hélicoïdales coaxiales (6) qui s'étendent du bas vers le haut et dont les bords sont en contact avec la paroi interne de la gaine (4) de manière à engendrer les deux couloirs parallèles (2) - (3).

3 - Dispositif suivant les revendications 1 et 2, caractérisé par le fait que les parois hélicoïdales (6) sont réalisées dans un matériau bon conducteur par exemple de la tôle mince.

4 - Dispositif suivant la revendication 1, caractérisé par le fait que le couloir (3) est alimenté depuis le haut par une prise d'air neuf, tandis que le couloir (2) est alimenté depuis le bas par une prise d'air vicié.

Fig.1

Fig.2

Fig.3

**Office européen des brevets**

**RAPPORT DE RECHERCHE EUROPEENNE**

EP 81 42 0045

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | US - A - 2 449 822 (SCHIBBYE)<br>* Colonne 2, lignes 5-7; colonne 3, ligne 32; colonne 4, lignes 18-37; figure 3 *<br><br>-- | 1,2 | F 24 F 7/08<br>F 28 D 7/02 |
| | FR - A - 2 297 382 (PIOT)<br>* Page 4, lignes 24-27; figure 1 *<br><br>-- | 3 | |
| | FR - A - 935 841 (BRUNNSCHWEILER)<br>* Page 2, lignes 81-94; figures 1,2 *<br><br>-- | 4 | **DOMAINES TECHNIQUES RECHERCHES (Int. Cl.³)**<br><br>F 24 F<br>F 28 D |
| A | FR - A - 2 335 800 (VALMET OY)<br><br>---- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-07-1981 | BURKHART |

OEB Form 1503.1  06.78